# EUROPEAN PATENT APPLICATION

(11) **EP 2 432 241 A2**
(43) Date of publication of application: **21.03.2012**
(21) Application number: 11175727.4
(22) Date of filing: 28.07.2011
(51) Int. Cl.: H04N 13/04

(54) **3D Glasses and 3D Display Apparatus Using IR Signal and RF Signal**

(30) Priority: 17.09.2010 KR 20100091592
(71) Applicant: Samsung Electronics Co., Ltd., Gyeonggi-do (KR)
(72) Inventor: Seong, Ki-bum, Gyeonggi-do (KR); Seo, Je-hwan, Daegu (KR); Lee, Cheon-seong, Gyeonggi-do (KR); Sung, Jun-ho, Seoul (KR); Yun, Sang-un, Seoul (KR); Hwang, Tae-don, Gyeonggi-do (KR)
(74) Representative: Bruce, Alexander Richard Henry

(57) **Abstract**

Three dimensional (3D) glasses and a 3D display apparatus are provided. The 3D glasses receive a sync signal from the 3D display apparatus through at least one of an infrared signal and a radio frequency signal.

## Description

The present invention relates to three-dimensional (3D) glasses for watching a 3D image and a 3D display apparatus for displaying the 3D image.

3D or stereoscopic image technology is being applied in various fields, such as those relating to information and telecommunication, broadcasting, educational training, military affairs, gaming, animation, virtual reality, computer aided design (CAD), and industrial technologies, among others, and forms a basic core technology of next generation 3D multimedia informatics and telecommunications used in these fields.

Generally, the three dimensional effect that a human recognizes is obtained by a combination of a number of factors, including a degree of change in the thickness of the crystalline lens of the eye according to a position of an object being observed, a difference in the angles between the eyes and the object, a difference in the position and shape of objects as respectively viewed by the left and right eyes, a disparity caused by a movement of the object, and other psychological and memory effects.

Among these, the binocular disparity caused by the approximate 6 to 7 cm lateral distance between a person's left and right eyes is a very important factor in the perception of the three dimensional effect. In other words, a person views an object with different angles due to the binocular disparity. Accordingly, images viewed by the left and right eyes are different due to the difference in angle of the two eyes to the object. When the two images are transmitted through the respective retinas of the two eyes to the brain, the brain unites the two images together and thus enables the perception of a 3D or stereoscopic image.

Stereoscopic image display apparatuses are divided into glasses type display apparatuses which are used with special glasses and non-glasses type display apparatuses which are not used with special glasses. Glasses type display apparatuses are again divided into color filter type display apparatuses which divide and select images by using color filters complementary to each other, polarization filter type display apparatuses which divide left and right eye images by using an obscuration effect by a combination of orthogonal polarization elements, and shutter glasses type display apparatuses which allow a user to perceive the 3D effect by alternatively blocking left and right eye images in response to synchronizing signals for projecting left and right eye image signals on a screen.

A 3D image is composed of a left eye image to be recognized by a left eye and a right eye image to be recognized by a right eye. The 3D display apparatus expresses the three dimensional effect by using a disparity between the left eye image and the right eye image.

To perceive a 3D image of the 3D display apparatus, a viewer wears 3D glasses. The 3D glasses receive 3D sync (synchronisation) signals from the 3D display apparatus to synchronize the glasses with the 3D display apparatus. As means for transmitting those sync signals, an infrared (IR) signal may be used.

However, when an IR signal is used to transmit the sync signals, interference due to light from a fluorescent lamp may occur, and if an obstacle exists, there is the additional drawback of a deterioration of the receiving rate.

Viewers want to more conveniently use 3D glasses and 3D display apparatuses in various spaces. Accordingly, there is a need for a solution to enable the reliable reception of sync signals in various spaces.

Exemplary embodiments overcome the above disadvantages and other disadvantages not described above. Also, exemplary embodiments are not required to overcome the disadvantages described above, and an exemplary embodiment may not overcome any of the problems described above.

One or more embodiments provide 3D glasses, which receive a sync signal from 3D display apparatus through at least one of an IR signal and a radio frequency (RF) signal, and a 3D display apparatus in combination with the 3D glasses.

According to one aspect of an exemplary embodiment, 3D glasses to be used in combination with a 3D display apparatus include an IR receiving unit which receives an IR signal from the 3D display apparatus; an RF communication unit which communicates with the 3D display apparatus by using an RF signal; and a control unit which controls to receive a sync signal from the 3D display apparatus through at least one of the IR signal and the RF signal.

When a command selecting one of the IR signal and the RF signal is inputted by a user, the control unit may control to receive the sync signal through the selected signal.

The control unit may measure received intensities of the IR signal and the RF signal and control to receive the signal having the higher received strength.

The control unit may control to receive the sync signal through the signal having the higher reception accuracy.

The control unit may determine the reception accuracy by measuring at least one of signal to noise ratios, block error rates, and bit error rates of the IR signal and the RF signal.

When the sync signal is set to be received through the RF communication unit, the control unit may determine whether the IR signal is received through the IR receiving unit, and receive the sync signal through the RF communication unit if the IR signal is received and deactivate the RF communication unit if the IR signal is not received.

When the sync signal is set to be received through the RF communication unit, the control unit may put the power supply for the IR receiving unit into a standby state of an off state.

When the sync signal is set to be received through the IR receiving unit, the control unit may put the power supply for the RF communication unit into a standby state of an off state.

The control unit may receive sync signal determining information through the RF communication unit, and may control to receive the sync signal by using one of the IR signal and the RF signal based on sync signal determining information.

The control unit controls to transmit sync signal determining information, which is information regarding the selection of one of the IR signal and the RF signal, to the 3D display apparatus through the RF communication unit.

According to an aspect of another exemplary embodiment, a 3D display apparatus includes an IR transmitting unit which transmits a sync signal to 3D glasses by using an IR signal; an RF communication unit which communicates with the 3D glasses by using an RF signal; and a control unit which controls to transmit the sync signal to the 3D glasses through at least one of the IR signal and the RF signal.

When a command selecting one of the IR signal and the RF signal is inputted by a user, the control unit may control to transmit the sync signal through the selected signal.

The control unit may control to transmit sync signal determining information, which is information instructing the selection of one of the RF signal and the IR signal for the selected signal, to the 3D glasses through the RF communication unit.

When sync signal determining information is received from the 3D glasses through the RF communication unit, the control unit may control to transmit the sync signal by using one of the IR signal and the RF signal, which corresponds to the sync signal determining information.

The above and/or other aspects will become more apparent by describing certain exemplary embodiments with reference to the accompanying drawings, in which:
FIG. 1 is a schematic view showing appearances of a 3D TV and 3D glasses according to an exemplary embodiment;
FIG. 2 is a block diagram showing a detailed construction of a 3D TV according to the exemplary embodiment;
FIG. 3 is a block diagram showing a detailed construction of 3D glasses according to the exemplary embodiment;
FIGS. 4A and 4B are views showing a process in which 3D glasses judge receivable signals and determine the kind of signal to be used as a sync signal, according to an exemplary embodiment;
FIGS. 5A to 5D are views showing a process in which the kind of signal to be used as the sync signal is determined by using a switch of the 3D glasses, according to another exemplary embodiment;
FIGS. 6A to 6D are views showing a process in which the kind of signal to be used as the sync signal is determined through a menu of the 3D TV, according to a further exemplary embodiment;
FIGS. 7A to 7C are views showing a process in which the kind of signal to be used as the sync signal is determined by measuring the received intensities of the signals, according to another exemplary embodiment;
FIGS. 8A and 8B are views showing a process in which when the sync signals are transmitted through a RF signal, a reception of the sync signals is determined according to whether the IR signal can be received, according to another exemplary embodiment; and
FIG. 9 is a schematic view showing greater detail of the appearance of 3D glasses according to an exemplary embodiment.

Exemplary embodiments are described in greater detail below with reference to the accompanying drawings.

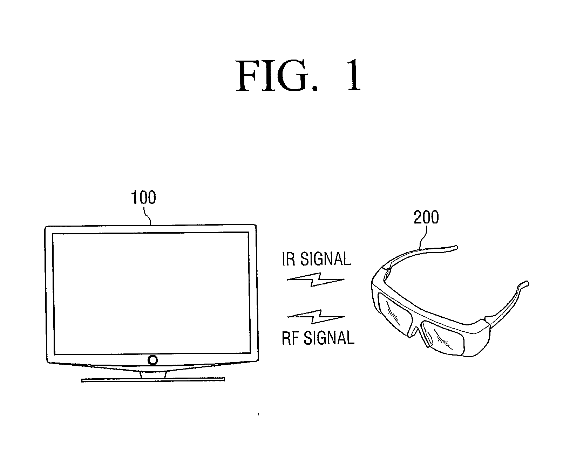

FIG. 1 is a schematic view showing appearances of a 3D TV 100 according to an exemplary embodiment. As shown in FIG, 1, the 3D TV 100 can communicate with 3D glasses 200.

The 3D TV 100 creates a left eye image and a right eye image and alternately displays them. A user alternately looks at the left eye image and the right eye image displayed on the 3D TV 100 with her or his left and right eyes by using the 3D glasses 200, thereby allowing her or him to perceive a 3D image.

To be more specific, the 3D TV 100 creates the left eye image and the right eye image and alternately displays the created left eye image and the created right eye image at regular intervals on a screen.

The 3D TV 100 creates sync signals for the created left eye image and the created right eye image and transmits them to the 3D glasses 200. Here, the sync signals are signals for synchronizing the 3D TV 100 and the 3D glasses 200 with each other. That is, the sync signals are signals for setting timings when the 3D glasses 200 open and close a left eye glass and a right eye glass thereof, respectively, for coordinating with when the 3D TV 100 alternately displays the left eye image and the right eye image.

The 3D glasses 200 receive the sync signals transmitted from the 3D TV 100 and alternately open the left eye glass and the right eye glass in synchronization with the left eye image and the right eye image displayed on the 3D TV 100.

In this way, the user can watch the 3D image by using the 3D glasses 200 and the 3D TV 100, as shown in FIG. 1.

The 3D TV 100 and the 3D glasses 200 transmit and receive the sync signals, respectively, by using at least one of an IR signal and a RF signal. Accordingly, according to the circumstances, the 3D TV 100 transmits the sync signals by using either the IR signal or the RF signal. The 3D glasses 200 also receive the sync signals by using either the IR signal or the RF signal.

Accordingly, the 3D TV 100 and the 3D glasses 200 can enable a user to view the 3D images in more types of locations. Hereinafter, constructions of the 3D TV 100 and the 3D glasses 200 will be described in greater detail with reference to the drawings.

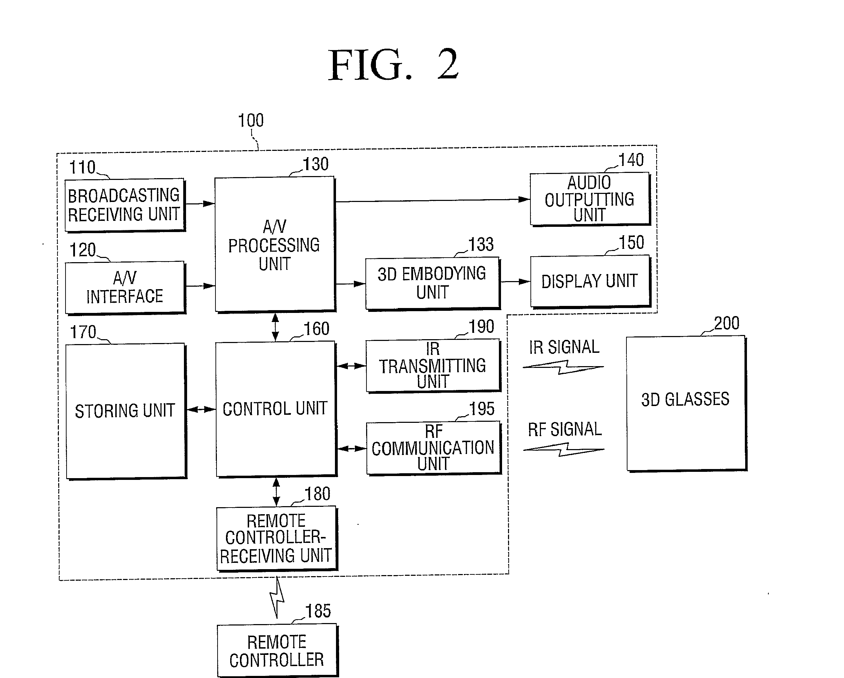

FIG. 2 is a block diagram showing a detailed construction of the 3D TV 100 according to an exemplary embodiment. As shown in FIG. 2, the 3D TV 100 includes a broadcasting receiving unit 110, an A/V interface 120, an A/V processing unit 130, a 3D embodying unit 133, an audio outputting unit 140, a display unit 150, a control unit 160, a storage unit 170, a remote controller-receiving unit 180, an IR transmitting unit 190 and an RF communication unit 195.

The broadcasting receiving unit 110 receives a broadcast by wire or radio from a broadcasting station or a satellite and demodulates it. In addition, the broadcasting receiving unit 110 receives 3D image signals for 3D image data.

The A/V interface 120 is connected to external appliances to receive images. In particular, The A/V interface 120 may receive 3D image data from the external appliances. The A/V interface 120 may be, for example, an interface, which receives image data via a Separate Video (S-Video) cable, a component cable, a composite cable, a D-subminiature (D-sub) cable, a digital visual interface (DVI), a High-Definition Multimedia Interface (HDMI^{TM}), or the like.

Here, the 3D image data means data including 3D image information. The 3D image data includes left eye image data and right eye image data in each data frame. The 3D image data is classified according to the format in which the left eye image data and the right eye image data are included. For instance, there are an interleave type image data, a side by side type image data, and an above-below type image data, among others.

The A/V processing unit 130 performs signal processing, such as a video decoding, video scaling, audio decoding, or the like, on image signals and audio signals inputted from the broadcasting receiving unit 110 and the A/V interface 120.

To be more specific, the A/V processing unit 130 performs signal processing, such as the audio decoding or the like, to the inputted audio signals. Then, the A/V processing unit 130 outputs the processed audio signals to the audio outputting unit 140.

In addition, the A/V processing unit 130 performs signal processing, such as the video decoding, the video scaling, or the like, to the inputted 3D image signals. Also, if the 3D image date is inputted, the A/V processing unit 130 outputs the inputted 3D image data to the 3D embodying unit 133.

The 3D embodying unit 133 creates a left eye image and a right eye image interpolated in a size of one picture by using the inputted 3D image data. That is, to embody a 3D image, the 3D embodying unit 133 modifies the image data to create the left eye image and the right eye image to be displayed on the screen.

To be more specific, the 3D embodying unit 133 separates left eye image data and right eye image data from the inputted 3D image data. Because the left eye image data and the right eye image data are included together in each frame in the received 3D image data, each of the separated left eye image data and the separated right eye image data has image date corresponding to one half of a full frame picture. Accordingly, the 3D embodying unit 133 magnifies or interpolates twice the separated left eye image data and the separated right eye image data in size to create a left eye image and a right eye image, each having a size of one picture frame, to be displayed on the screen.

The 3D embodying unit 133 then outputs the created left eye image and the created right eye image to the display unit 150.

The audio outputting unit 140 outputs the audio signal transmitted from the A/V processing unit 130 to a speaker or the like.

The display unit 150 outputs to display the images transmitted from the 3D embodying unit 133 on the screen. Particularly, in case of the 3D image, the display unit 150 alternately outputs the left eye image and the right eye image on the screen.

The storage unit 170 stores the images received from the broadcasting receiving unit 110 or the AV interface 120. The storage unit 170 may be embodied as a hard disk, a nonvolatile memory, or another type of memory.

The remote controller-receiving unit 180 receives inputs or commands of the user from a remote controller 185 and transmits them to the control unit 160. Also, besides, as user operating means, a touch screen may be provided.

The IR transmitting unit 190 transmits the sync signals, which are clock signals for alternately opening the left eye glass and the right eye glass of the 3D glasses 200, by using the IR signal.

The RF communication unit 195 transmits the sync signals for the 3D glasses 200 by using the RF signal. In addition, the RF communication unit 195 may transmit and receive various information to and from the 3D glasses 200. To be more specific, The RF communication 195 may also transmit and/or receive sync signal determining information to and from the 3D glasses 200. As the RF communication unit 195, various kinds of RF communication modules, may be used. For instance, a communication module utilizing ZigBee, Bluetooth, wireless LAN, or the like, may be used.

Here, the sync signal determining information corresponds to information which determines which of the IR signal and the RF signal is to be used as the sync signal. For instance, if sync signal determining information includes "the IR signal", it indicates that the IR signal is to be used as the sync signal. If the sync signal determining information includes "the RF signal", it indicates that the RF signal is to be used as the sync signal.

The control unit 160 reads a user's commands, based on the inputs or commands of the user transmitted from the remote controller 190, and controls a general operation of the 3D TV 100 according the read user's command.

To be more specific, the control unit 160 controls to transmit the sync signals to the 3D glasses 200 through at least one of the IR signal and the RF signal. That is, if transmitting the sync signals through the IR signal, the control unit 160 controls the IR transmitting unit 190 to create and transmit the sync signals in the form of the IR signal. If transmitting the sync signals through the RF signal, the control unit 160 controls the RF communication unit 195 to create and transmit the sync signals in the form of the RF signal.

When the command for selecting one of the IR signal and the RF signal is inputted by the user, the control unit 160 controls to transmit the sync signals through the selected signal. For this, the control unit 160 displays on the screen a graphic user interface (GUI) for selecting the kind of signal to be used as the sync signals. The user can then select the kind of signal to be used as the sync signals that she or he wants, by using the remote controller, the GUI or the like.

As described above, when the kind of signal to be used as the sync signals is determined by the user, the control unit 160 controls to transmit the sync signal determining information, which is information on the selected signal, to the 3D glasses 200 through the RF communication unit 195. The control unit 160 then transmits the sync signals in the form of the signal of the kind determined between the IR signal and the RF signal, to the 3D glasses 200. At this time, the control unit 160 may activate only the unit for transmitting the determined signal, that is, one of the IR transmitting unit 190 and the RF communication unit 195, and deactivate the other. In other word, if the sync signals are set to be received through the RF communication unit 195, the control unit 160 may put the power supply for the IR transmitting unit 190 into a standby state or an off state. If the sync signal is set to be received through the IR receiving unit 190, the control unit 160 may put the power supply for the RF communication unit 195 into a standby state or an off state.

On the other hand, the control unit 160 may receive sync signal determining information from the 3D glasses 200 through the RF communication unit 195. This pertains to a case in which the kind of signal to be used as the sync signals is determined at the 3D glasses 200. Accordingly, the control unit 160 controls to transmit the sync signals by using the signal corresponding to the information provided in the sync signal determining information.

Further, the control unit 160 may transmit the sync signals by using both the IR transmitting unit 190 and the RF communication unit 195. In this case, the 3D glasses 200 may select either the IR signal or the RF signal to receive the sync signals.

Also, alternately, the control unit 160 may transmit the sync signals through the RF communication 195 and may transmit confirmation signals through the IR transmitting unit 190. This pertains to a case in which the 3D glasses 200 detect an IR receivable area by using the IR signal and receive the sync signals via the RF signal only if the 3D glasses 200 are not in the IR receivable area. Here, the confirmation signals are signals for confirming whether the 3D glasses 200 can receive the IR signal. For instance, the confirmation signals may be pulse signals having certain intervals. Also, as the confirmation signals, the sync signals may be used.

In this way, the 3D TV 100 may transmit the sync signals in the form of the IR signal through the IR transmitting unit 190 and transmit the sync signals in the form of the RF signal through the RF communication unit 195.

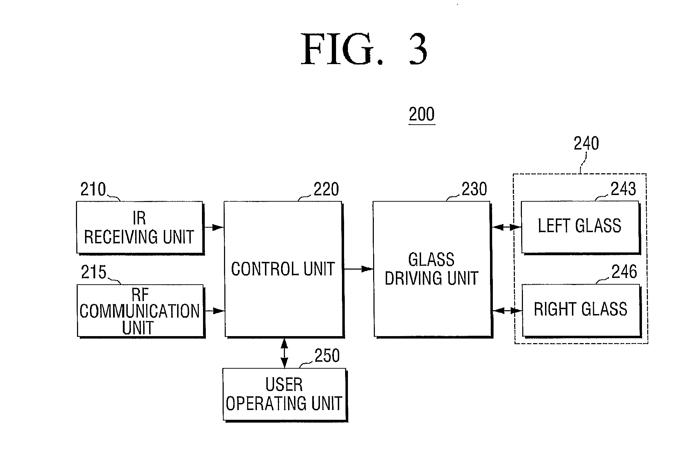

Hereinafter, a detailed construction of the 3D glasses 200 will be explained with reference to FIG. 3. FIG. 3 is a block diagram showing the detailed construction of 3D glasses 200 according to an exemplary embodiment.

As shown in FIG. 3, the 3D glasses 200 include a IR receiving unit 210, a RF communication unit 215, a control unit 220, a glass driving unit 230, and a glass unit 240.

The IR receiving unit 210 receives sync signals for 3D image from the 3D TV 100 by using an IR signal. The 3D TV 100 emits the sync signals through the IR transmitting unit 190 by using the IR signal having straight-ability, and the IR receiving unit 210 of the 3D glasses 200 receives the sync signals by receiving the emitted the IR signals.

For instance, the sync signals for the 3D glasses 200 transmitted to the IR receiving unit 210 from the 3D TV 100 may be signals in which a high level is transmitted in a first period and a lower level is transmitted in a second period, and the first and second periods are alternately repeated at predetermined time intervals. In this case, the 3D glasses may be driven, so that a left eye glass 243 is opened for the first period when the signal has a high level and a right eye glass 246 is closed for the second period when the signal has a lower level.

The RF communication 215 receives the sync signals transmitted in the form of an RF signal from the 3D TV 100. In addition, the RF communication 215 may transmit and receive various information to and from the 3D TV 100. To be more specific, the RF communication unit 215 may transmit and receive sync signal determining information to and from the 3D TV 100. As the RF communication unit 215, various kinds of RF communication modules, may be used. For instance, a communication module using ZigBee, Bluetooth, wireless LAN, or the like , may be used.

The control unit 220 controls a general operation of the 3D glasses 200. To be more specific, the control unit 220 controls to receive the sync signals from the 3D TV 100 through at least one of the IR signal and the RF signal.

In other word, if the sync signals are received through the IR signal, the control unit 220 controls the IR receiving unit 210 to receive the sync signals in the form of the IR signal. In this case, the control unit 220 may deactivate the RF communication unit 215.

If the sync signals are received through the RF signal, the control unit 220 controls the RF communication unit 215 to receive the sync signals in the form of the RF signal. In this case, the control unit 220 may deactivate the IR receiving unit 210.

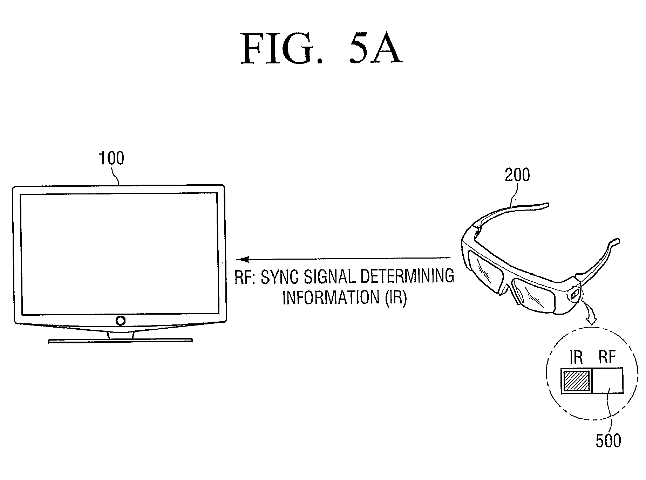

When a command for selecting one of the IR signal and the RF signal is inputted by the user, the control unit 220 controls to receive the sync signals through the selected signal. For this, a user operating unit 250 may include a switch for selecting either the IR signal or the RF signal. This will be later explained in detail with reference to FIGS. 5A to 5D. Accordingly, the control unit 220 selects the kind of the signal for receiving the sync signals, according to the command inputted through the user operating unit 250.

As described above, when the kind of signal to be used as the sync signals is determined by the input of the user, the control unit 220 controls to transmit sync signal determining information, which is information on the selected signal, to the 3D TV 100 through the RF communication unit 215. The control unit 220 then controls to receive the sync signals in the form of the signal of the kind determined. At this time, the control unit 220 may activate only the unit for receiving the determined signal, that is, one of the IR receiving unit 210 and the RF communication unit 215, and deactivate the other.

On the other hand, the control unit 220 may receive sync signal determining information from the 3D TV 100 through the RF communication unit 215. This pertains to a case in which the kind of signal to be used as the sync signals is determined at the 3D TV 100. Accordingly, the control unit 220 controls to receive the sync signals by using the signal as determined by the sync signal determining information.

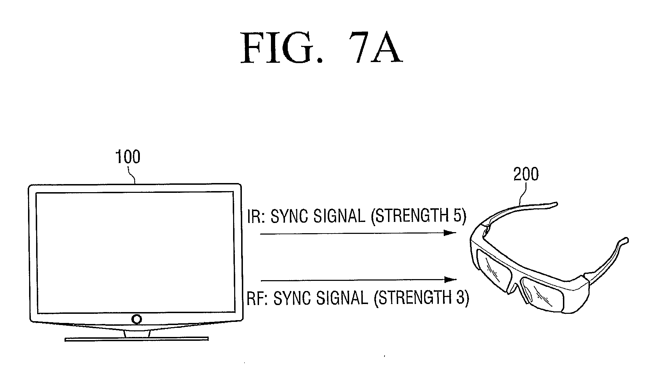

Further, if both the IR signal and the RF signal are received, the control unit 220 receives the sync signals through either IR signal or the RF signal. For instance, the control unit 220 may measure received intensities of the IR signal and the RF signal. The control unit 220 may then control to receive the sync signal by using the stronger signal between the IR signal and the RF signal. This will be later explained with reference to FIGS. 7A to 7C.

Also, the control unit 220 may measure reception accuracies of the IR signal and the RF signal. In this case, the control unit 220 may control to receive the sync signal by using the signal having the higher reception accuracy between the IR signal and the RF signal. The control unit 220 determines the reception accuracies by measuring at least one of signal to noise ratios, block error rates and bit error rates of the IR signal and the RF signal.

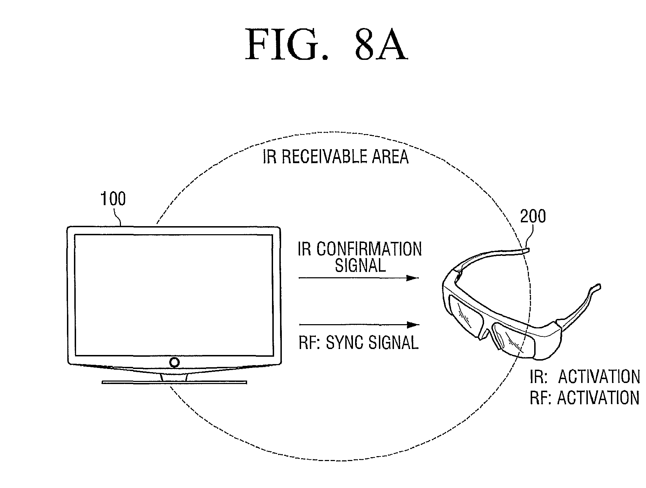

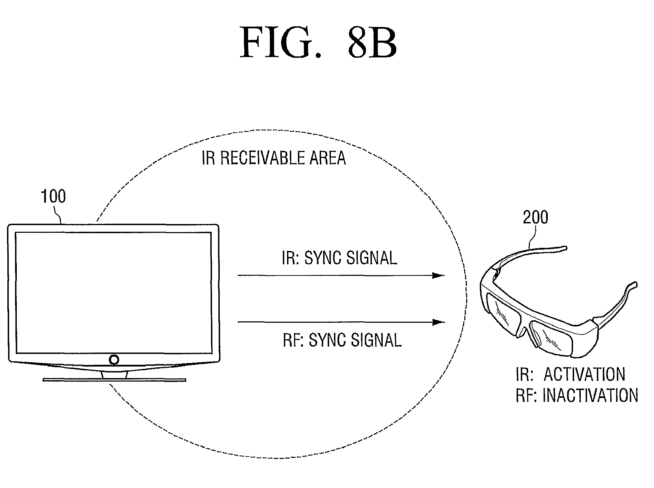

Also, the control unit 220 may receive the sync signal through the RF communication 215 and receive confirmation signals through the IR transmitting unit 210. That is, the control unit 220 detects an IR receivable area by using the IR signal and then receives the sync signals in the form of the RF signal only if the 3D glasses 200 are not in the IR receivable area. Accordingly, the control unit 220 receives the sync signals through the RF communication unit 215 if the IR signal is not received and deactivates the RF communication unit 215 if the IR signal is received. This is explained in further detail with reference to FIGS. 8 and 8B.

Here, the confirmation signals are signals for confirming whether the 3D glasses 200 can receive the IR signal. For instance, the confirmation signals may be pulse signals having certain intervals. Also, as the confirmation signals, the sync signals may be used.

On the other hand, the control unit 220 transmits the sync signals received from the IR receiving unit 210 or the RF communication unit 220 to the glass driving unit 230, to control an operation of the glass driving unit 230. In particular, the control unit 220 controls the glass driving unit 230 to create driving signals for driving the glass unit 240 in the glass driving unit 230, based on the sync signals.

The glass driving unit 230 creates the driving signals, based on the sync signals received from the control unit 220. Particularly, because the glass unit 240 to be described later is made up of a left eye glass 243 and a right eye glass 246, the glass driving unit 230 creates a left eye driving signal for driving the left eye glass 243 and a right eye driving signal for driving the right eye glass 246, and transmits the created left eye driving signal and the created right eye driving signal to the left eye glass 243 and the right eye glass 246, respectively.

The glass unit 240 is made up of the left eye glass 243 and the right eye glass 246, as mentioned above, and alternately opens and closes the respective glasses according to the received driving signals received from the glass driving unit 230.

The user operating unit 250 receives commands of the user required in operating the 3D glasses 200. To be more specific, the user operating unit 250 includes an input part for selecting the kind of signal to be used in receiving the sync signals. For instance, the user operating unit 250 may include a switch for selecting either the IR signal or the RF signal.

By using the 3D glasses 200 constructed as described above, the user can alternately see the left eye image and the right eye image displayed on the 3D TV with her or his left and right eyes.

In this way, the 3D glasses 200 may receive the sync signal in the form of the IR signal through the IR receiving unit 210, and receive the sync signals in the form of the RF signal through the RF communication unit 215.

Because when using the 3D TV 100 and the 3D glasses 200 as described above, both the IR signal and the RF signal can be used, the user can select the sync signal for the 3D glasses and the 3D display apparatus by using signal means. Accordingly, the 3D glasses 200 can prevent problems caused by an interference phenomenon due to an illumination light, such as a fluorescent light, and a straight-ability, which is a weakness of IR, and overcome constraints of space by using the RF signal.

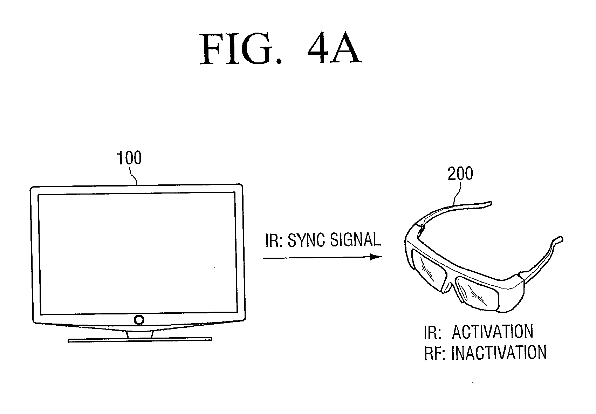

Hereinafter, applications of the 3D TV 100 and the 3D glasses 200 will be explained in detail with reference to FIGS. 4A to 9.

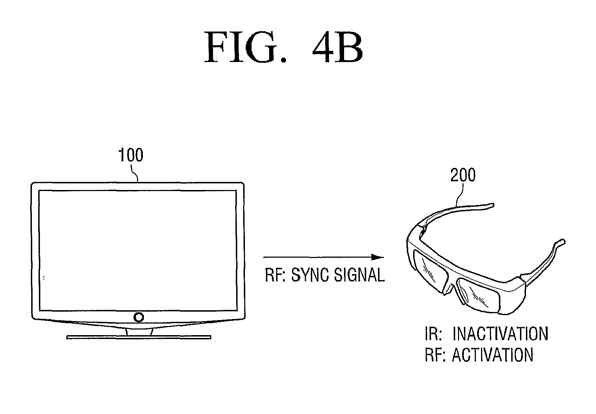

FIGS. 4A and 4B are views showing a process in which the 3D glasses 200 judge receivable signals and determines the kind of signal to be used as the sync signals, according to an exemplary embodiment.

FIG. 4A shows a case where the 3D TV 100 transmits the sync signals by using the IR signal. As shown in FIG. 4A, when the 3D TV 100 transmits the sync signals by using the IR signal, the 3D glasses 200 perceive that the received signals are the IR signal. Accordingly, to receive the IR signal, the 3D glasses 200 activates the IR receiving unit 210 and deactivates the RF communication unit 215.

In this way, the 3D glasses 200 receive the sync signals by using the IR signal.

FIG. 4B shows a case that the 3D TV 100 transmits the sync signals by using the RF signal. As shown in FIG. 4B, when the 3D TV 100 transmits the sync signals by using the RF signal, the 3D glasses 200 perceive that the received signals are the RF signal. Accordingly, to receive the RF signal, the 3D glasses 200 activates the RF communication unit 215 and deactivates the IR receiving unit 210.

In this way, the 3D glasses 200 receive the sync signals by using the RF signal.

FIGS. 5A to 5D are views showing a process in which the kind of signal to be used as the sync signals is determined by using a switch of the 3D glasses 200, according to another exemplary embodiment.

FIGS. 5A to 5D show a case where the user operating unit 250 disposed in the 3D glasses 200 is a switch 500 for selecting either the IR signal or the RF signal.

FIG. 5A shows a case where the switch 500 is set to an 'IR' by the user. When the switch 500 is set to the 'IR' by the user, the 3D glasses 200 recognizes the IR signal as the kind of signal to be used as the sync signals. Accordingly, the 3D glasses 200 transmit sync signal determining information to the 3D TV 100 through the RF communication 215. At this time, the sync signal determining information indicates 'IR', thereby representing that the IR signal is selected.

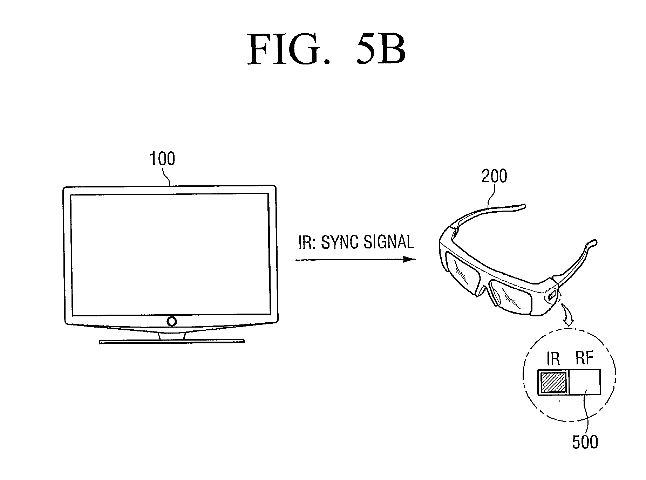

Then, as shown in FIG. 5B, the 3D TV 100 transmits the sync signals to the 3D glasses 200 by using the IR signal. To be more specific, the 3D TV 100 recognizes that the kind of signal to be used as the sync signals determined in the 3D glasses 200 is the IR signal, by using the sync signal determining information. Accordingly, the 3D TV 100 activates the IR transmitting unit 190 and transmits the sync signals in the form of the IR signal through the IR transmitting unit 190.

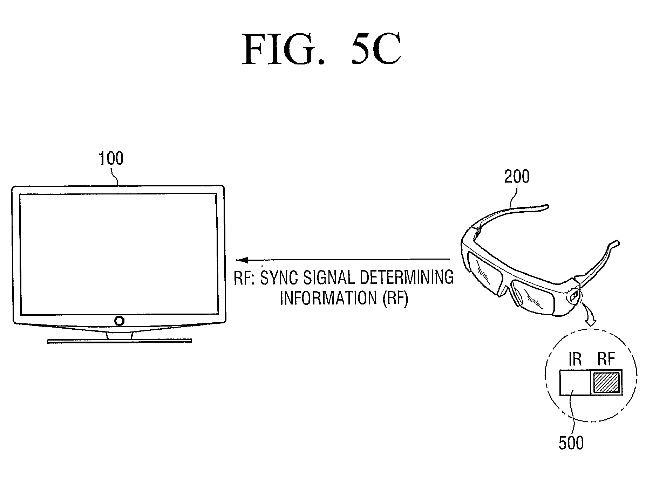

To the contrary, FIG. 5C shows a case where the switch 500 is set to an 'RF' by the user. When the switch 500 is set to the 'RF' by the user, the 3D glasses 200 recognizes the RF signal as the kind of signal to be used as the sync signals. Accordingly, the 3D glasses 200 transmit sync signal determining information to the 3D TV 100 through the RF communication 215. At this time, the sync signal determining information indicates 'RF', thereby representing that the RF signal is selected.

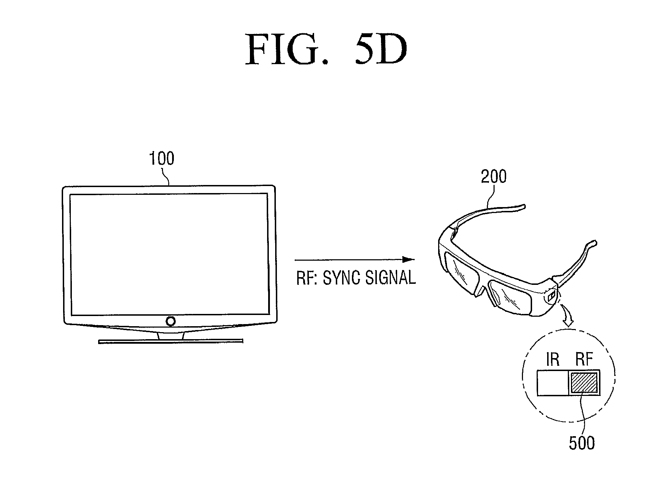

Then, as shown in FIG. 5D, the 3D TV 100 transmits the sync signals to the 3D glasses 200 by using the RF signal. To be more specific, the 3D TV 100 recognizes that the kind of signal to be used as the sync signals determined in the 3D glasses 200 is the RF signal, by using the sync signal determining information. Accordingly, the 3D TV 100 activates the RF communication unit 195, and transmits the sync signals in the form of the RF signal through the RF communication unit 195.

As shown in FIGS. 5A to 5D, the kind of signal to be used as the sync signals may be determined by the input or manipulation by the user of the 3D glasses 200. In addition, although in FIGS. 5A to 5D, the kind of signal to be used as the sync signals illustrated and explained as being selected by the switch 500, the kind of signal to be used may also be selected by any other manipulating means included in the 3D glasses 200.

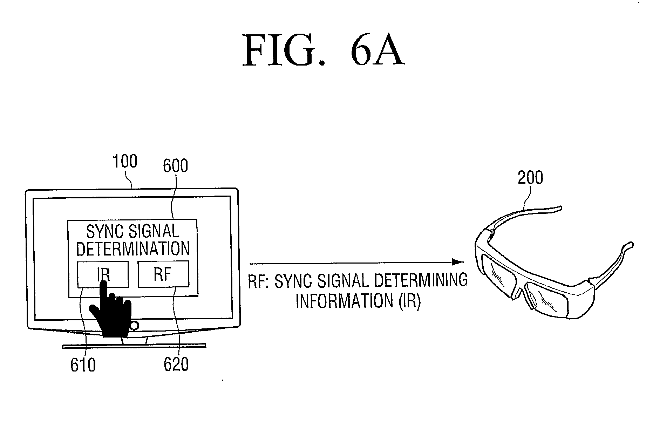

FIGS. 6A to 6D are views showing a process in which the kind of signal to be used as the sync signals is determined through a GUI of the 3D TV, according to another exemplary embodiment.

FIG. 6A shows a state where the GUI 600 for selecting the kind of signal to be used as the sync signals is displayed on the screen of 3D TV 100. Also, FIG. 6A shows a state where the user selects an IR icon 610 between the IR icon 610 and an RF icon 620. Accordingly, when the IR icon 610 is selected by the user, the 3D TV 100 perceives the IR signal as the kind of signal to be used as the sync signals. The 3D TV 100 then transmits sync signal determining information to the 3D glasses 200 through the RF communication 195. At this time, the sync signal determining information is displayed as an 'IR', thereby indicating that the IR signal is selected.

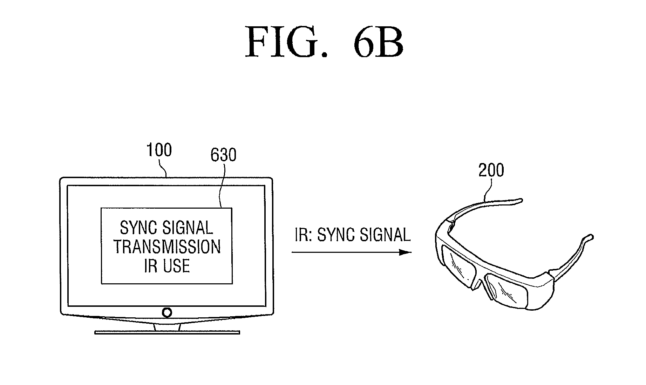

Then, as shown in FIG. 6B, the 3D TV 100 transmits the sync signals to the 3D glasses 200 by using the IR signal. To be more specific, the 3D TV 100 recognizes that the kind of signal to be used as the sync signals determined by the selective input or manipulation of the user to the GUI 600 is the IR signal. Accordingly, the 3D TV 100 activates the IR transmitting unit 190, and transmits the sync signals in the form of the IR signal through the IR transmitting unit 190. The 3D TV 100 then displays a message 630 on the screen to represent that it transmits the sync signals by using the IR signal.

The 3D glasses 200 receive the sync signals from the 3D TV 100 by using the IR signal. To be more specific, the 3D glasses 200 perceives that the kind of signal to be used as the sync signals determined in the 3D TV 100 is the IR signal, by using the sync determining information. Accordingly, the 3D glasses 200 activates the IR receiving unit 210, and transmits the sync signals in the form of the IR signal through the IR receiving unit 210.

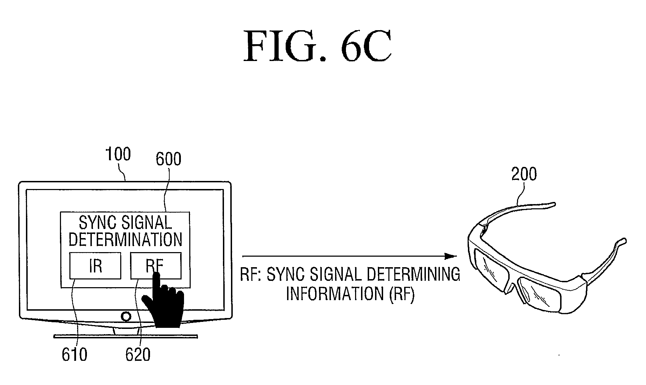

In contrast, FIG. 6C shows a state in which the user selects the RF icon 620 between the IR icon 610 and the RF icon 620. Accordingly, when the RF icon 620 is selected by the user, the 3D TV 100 perceives the RF signal as the kind of signal to be used as the sync signal. Accordingly, the 3D TV 100 transmits sync signal determining information to the 3D glasses 200 through the RF communication 195. At this time, the sync signal determining information indicates 'RF', thereby representing that the RF signal is selected.

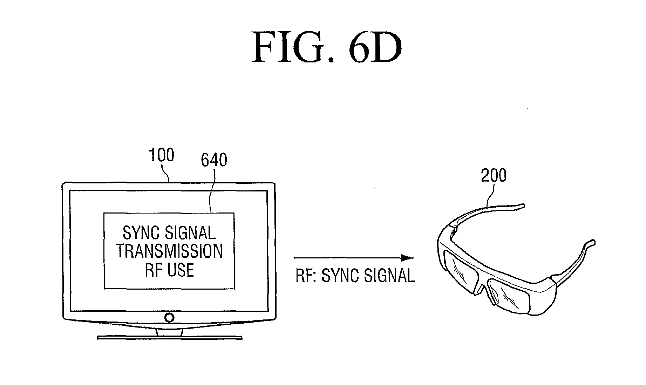

Then, as shown in FIG. 6D, the 3D TV 100 transmits the sync signals to the 3D glasses 200 by using the RF signal. To be more specific, the 3D TV 100 recognizes that the kind of signal to be used as the sync signals determined by the selective input or manipulation of the user to the GUI 600 is the RF signal. Accordingly, the 3D TV 100 activates the RF communication unit 195, and transmits the sync signals in the form of the RF signal through the RF communication unit 195. The 3D TV 100 then displays a message 640 on the screen to represent that it transmits the sync signals by using the RF signal.

The 3D glasses 200 receive the sync signals from the 3D TV 100 by using the RF signal. To be more specific, the 3D glasses 200 perceives that the kind of signal to be used as the sync signals determined in the 3D TV 100 is the RF signal, by using the sync determining information. Accordingly, the 3D glasses 200 activate the RF communication unit 215, and transmit the sync signals in the form of the RF signal through the RF communication unit 215.

As shown in FIGS. 6A to 6D, the kind of signal to be used as the sync signals may be determined by the input or manipulation by the user of the 3D TV 100. In addition, although in FIGS. 6A to 6D, the kind of signal to be used as the sync signals illustrated and explained as being selected by the GUI 600, the kind of signal to be used may also be selected by any other user manipulating means provided in the 3D TV 100.

FIGS. 7A to 7C are views showing a process in which the kind of signal to be used as sync signals is determined by using the received intensities of the signals, according to another exemplary embodiment.

FIG. 7A shows a case where the 3D TV 100 transmits the sync signals by using both the IR signal and the RF signal. When the 3D TV 100 transmits both kinds of sync signals, the 3D glasses 200 measures the received intensities of the IR signal and the RF signal. The 3D glasses 200 then receive the sync signals by using the kind of signal having the higher received strength.

As shown in FIG. 7A, the 3D glasses 200 measures a received strength of 5 for the IR signal and a received strength of 3 for the RF signal. Here, the received intensities are values, which may vary according to positions and environments of the 3D glasses 200, and for the sake of convenient explanation, are illustrated as exemplary, arbitrarily set received strengths of 5 and 3.

In case of FIG. 7A, because the received strength of the IR signal measured by the 3D glasses 200 is higher than that of the RF signal, the 3D glasses 200 determines the IR signal as the kind of signal to be used as the sync signal.

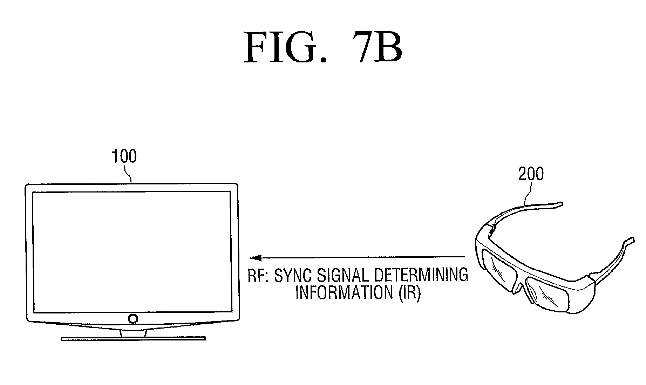

Accordingly, as shown in FIG. 7B, the 3D glasses 100 transmit sync signal determining information to the 3D TV 100 through the RF communication unit 215. At this time, the sync signal determining information indicates 'IR', thereby representing that the IR signal is selected.

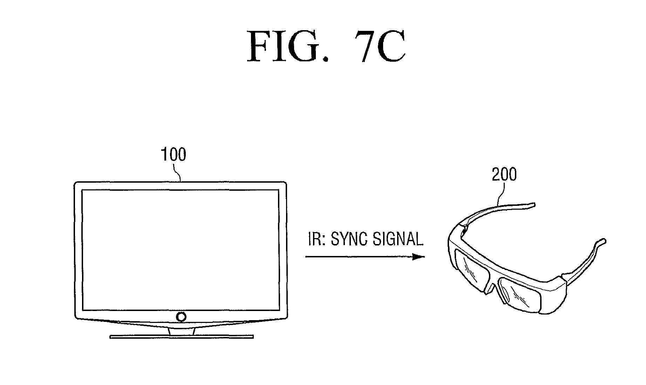

As shown in FIG. 7C, the 3D TV 100 transmits the sync signal to the 3D glasses 200 by using the IR signal. To be more specific, the 3D TV 100 recognizes that the kind of signal to be used as the sync signal determined by using the sync signal determining information is the IR signal. Accordingly, the 3D TV 100 activates the IR transmitting unit 190, and transmits the sync signal in the form of the IR signal through the IR transmitting unit 190.

The 3D glasses 200 receive the sync signal from the 3D TV 100 by using the IR signal. To be more specific, the 3D glasses 200 activate the IR receiving 210, and receive the sync signal in the form of the IR signal through the IR receiving unit 210.

In contrast, when the received strength of the RF signal is higher than that of the IR signal, the 3D glasses 200 determine the RF signal as the kind of signal to be used as the sync signal. This can be inferred according to the explanation as described above with reference to FIGS. 7A to 7C, and therefore a detailed explanation thereof will be omitted.

As shown in FIGS. 7A to 7C, the kind of signal to be used as the sync signal may be determined by the received strengths of the signals received by the 3D glasses 200. In addition, although in FIGS. 7A to 7C, the kind of signal to be used as the sync signal is illustrated and explained as being selected based on the received strengths of the signals, when both the IR signal and the RF signal are received, the kind of signal to be used may also be selected based on another standard such as reception accuracies instead of the received strengths of the signals.

FIGS. 8A and 8B are views showing a process in which when the sync signal is transmitted through the RF signal, a reception of the sync signal is determined according to whether the IR signal can be received, according to another exemplary embodiment.

As shown in FIG. 8A, the 3D TV 100 transmits confirmation signals through the IR signal, and transmits the sync signal through the RF signal. Here, the confirmation signals are signals, which are transmitted for determining whether the 3D glasses 200 are located in an IR receivable area. The IR receivable area represents where the 3D glasses can receive the IR signal transmitted from the 3D TV 100. The IR receivable area also corresponds to an area within which a user can easily view a 3D image displayed on the 3D TV. Outside the IR receivable area, it may be difficult for a user to view the 3D image. Accordingly, when it is determined that the 3D glasses are outside the IR receivable area, the RF communication unit 215 may be deactivated to save energy.

In case of FIG. 8A, the 3D glasses 200 are located within the IR receivable area. Accordingly, it can be confirmed that in the 3D glasses 200, both the IR receiving unit 210 and the RF communication unit 215 are activated. The 3D glasses 200 can receive the sync signals through the RF communication unit 215.

On the other hand, FIG. 8B shows a case where the 3D glasses 200 are located out of the IR receivable area. Accordingly, in the 3D glasses 200, only the IR receiving unit 210 is activated and the RF communication unit 215 is deactivated.

As described above, the 3D glasses 200 can determine whether to use the RF communication unit 215 according whether the confirmation signals in the form of the IR signal are received. In general, in an area where the IR signal is not received corresponds to an area where it is difficult for the user to watch the broadcast through the 3D TV 100. Accordingly, the 3D glasses 200 can prevent the RF communication unit 215 from being unnecessarily operated.

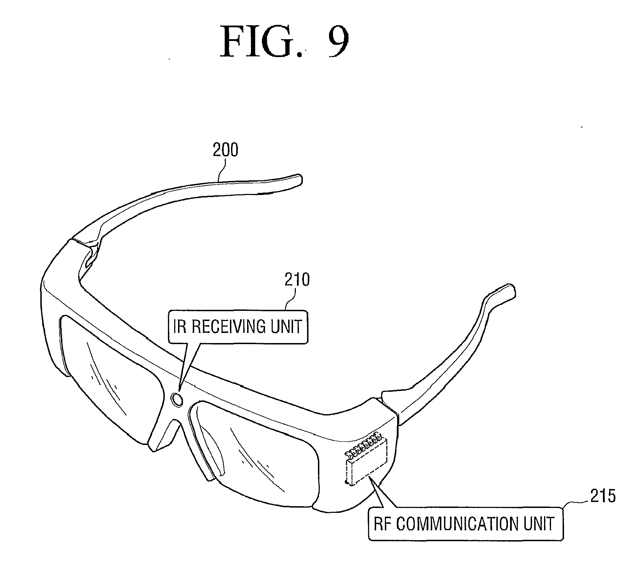

FIG. 9 is a schematic view showing the appearance of 3D glasses according to an exemplary embodiment in greater detail. As shown in FIG. 9, the 3D glasses 200 are provided with both the IR receiving unit 210 and the RF communication unit 210.

As described above, according to various aspects, the 3D glasses, which receive the sync signal from the 3D display apparatus through at least one of the IR signal and the RF signal, and the 3D display apparatus in combination with the 3D glasses can be provided. Accordingly, a user can watch a 3D image in more various spaces by using the 3D glasses.

In particular, because both the IR signal and the RF signal can be used, the user can select to have the sync signal for the 3D glasses and the 3D display apparatus received/transmitted by either the RF signal or the IR signal.

In the above-described exemplary embodiments, the 3D display apparatus is illustrated and described as being the 3D TV 100, but the 3D display apparatus may be also be another apparatus capable of displaying a 3D image. For instance, the 3D display apparatus may be a 3D monitor, a 3D portable media player (PMP), or another type of display device.

As described above, although exemplary embodiments have been explained, the present invention it is not limited thereto. The present teaching can be readily applied to other types of apparatuses and many alternatives, modifications, and variations will be apparent to those skilled in the art. Thus, the scope of the present invention is not to be construed as being limited to the description of the exemplary embodiments, and is to be construed by the attached claims.

## Claims

1. Three-dimensional (3D) glasses for use in combination with a 3D display apparatus, the 3D glasses comprising:
an infrared receiving unit to receive an infrared signal from the 3D display apparatus;
an RF communication unit to communicate with the 3D display apparatus by using a radio frequency (RF) signal; and
a control unit configured to receive a sync signal from the 3D display apparatus through at least one of the infrared signal and the RF signal.

2. The 3D glasses of claim 1, wherein when a command selecting one of the infrared signal and the RF signal is inputted by a user, the control unit controls to receive the sync signal through the selected signal.

3. The 3D glasses of claim 1 or 2, wherein the control unit measures received strengths of the infrared signal and the RF signal and controls to receive the sync signal through one of the infrared signal and the RF signal, the received strength of which is higher.

4. The 3D glasses of claim 1 or 2, wherein the control unit controls to receive the sync signal through one of the infrared signal and the RF signal, a reception accuracy of which is higher.

5. The 3D glasses of claim 4, wherein the control unit determines the reception accuracy by measuring at least one of signal to noise ratios, block error rates and bit error rates of the infrared signal and the RF signal.

6. The 3D glasses of any one of claims 1 to 5, wherein when the sync signal is set to be received through the RF communication unit, the control unit determines whether the infrared signal is received through the infrared receiving unit, and receives the sync signal through the RF communication unit if the infrared signal is received and deactivates the RF communication unit if the infrared signal is not received.

7. The 3D glasses of any one of claims 1 to 6, wherein when the sync signal is set to be received through the RF communication unit, the control unit sets a power supply of the infrared receiving unit to a standby state or an off state.

8. The 3D glasses of any one of claims 1 to 7, wherein when the sync signal is set to be received through the infrared receiving unit, the control unit puts a power supply of the RF communication unit into a standby state or an off state.

9. The 3D glasses of any one of claims 1 to 8, wherein the control unit receives sync signal determining information through the RF communication unit, and controls to receive the sync signal by using one of the infrared signal and the RF signal, which corresponds to the sync signal determining information.

10. The 3D glasses of any one of claims 1 to 9, wherein the control unit controls to transmit sync signal determining information, which is information indicating a selection of one of the infrared signal and the RF signal, to the 3D display apparatus through the RF communication unit.

11. A 3D display apparatus for use in combination with 3D glasses, the display apparatus comprising:
an infrared transmitting unit to transmit a sync signal to the 3D glasses by using an infrared signal;
an RF communication unit to communicate with the 3D glasses by using a radio frequency (RF) signal; and
a control unit controlling to transmit the sync signal to the 3D glasses through at least one of the infrared signal and the RF signal.

12. The 3D display apparatus of claim 11, wherein when a command selecting one of the infrared signal and the RF signal is inputted by a user, the control unit controls to transmit the sync signal through the selected signal.

13. The 3D display apparatus of claim 12, wherein the control unit controls to transmit sync signal determining information, which is information indicating the selected signal, to the 3D glasses through the RF communication unit.

14. The 3D display apparatus of any one of claims 11 to 13, wherein when sync signal determining information is received from the 3D glasses through the RF communication unit, the control unit controls to transmit the sync signal by using one of the infrared signal and the RF signal, which corresponds to the sync signal determining information.
